# EUROPEAN PATENT APPLICATION

(11) **EP 4 712 430 A1**
(43) Date of publication of application: **18.03.2026**
(21) Application number: 25202062.3
(22) Date of filing: 15.09.2025
(51) Int. Cl.: H04L 45/00, H04L 43/022, H04L 43/0876, H04L 45/7452, H04L 45/76

(54) **IDENTIFY HOT PATH DURING RUNTIME**

(30) Priority: 16.09.2024 US 202418885822; 15.10.2024 LU 103411
(71) Applicant: Mellanox Technologies, Ltd., 2069200 Yokneam (IL)
(72) Inventor: YANAI, Roni Bar, 2069200 Yokneam (IL); KAM, Ori, 2069200 Yokneam (IL)
(74) Representative: Mathys & Squire

(57) **Abstract**

In one embodiment, a network device includes an interface to receive packets, packet processing circuitry including a steering engine to process the packets according to match-and-action tables, the match-and-action tables defining nodes in a graph so that during the processing of the packets by the steering engine the packets traverse paths in the graph, and a plurality of per-node packet counters to count ones of the packets traversing respective ones of the nodes of the graph.

## Description

### FIELD OF THE DISCLOSURE

The present disclosure relates to computer systems, and in particular, but not exclusively to, packet processing.

### BACKGROUND

Network devices are required to perform flexible and sophisticated packet processing at high speed. For this purpose, many network devices use ternary content-addressable memory (TCAM) components to store rules (e.g., in the form of match-and-action tables) that are to be applied in processing packets. To search the TCAM, one or more fields of the packet (typically header fields) are concatenated and/or processed to form a key. A match between the key and a given TCAM entry can be used to trigger various actions in the network device, such as forwarding decisions, packet encapsulation and de-capsulation, security filtering, and quality of service classification. For example, a network device may include a steering engine which determines one or more actions to be performed using match-and-action tables. For example, a packet is parsed and some of the parsed data is matched against one or more of the match-and-action tables to find an action or actions to be performed.

### SUMMARY

The invention is defined by the claims. In order to illustrate the invention, aspects and embodiments which may or may not fall within the scope of the claims are described herein.

There is also provided in accordance with an embodiment of the present disclosure, a network device including an interface to receive packets, packet processing circuitry including a steering engine to process the packets match-and-action tables, the match-and-action tables defining nodes in a graph so that during the processing of the packets by the steering engine the packets traverse paths in the graph, and a plurality of per-node packet counters to count ones of the packets traversing respective ones of the nodes of the graph.

Further in accordance with an embodiment of the present disclosure the packet processing circuitry includes at least one processor to find ones of the match-and-action tables associated with the per-node packet counters, and update the per-node packet counters responsively to the found match-and-action tables associated with the per-node packet counters, wherein the packet processing circuitry is to instruct the at least one processor to update the per-node packet counters responsively to finding the match-and-action tables associated with the per-node packet counters.

Still further in accordance with an embodiment of the present disclosure, the device includes a memory, wherein the match-and-action tables are assigned to regions of the memory, the per-node packet counters are associated with given ones of the regions of the memory associated with given ones of the match-and-action tables, the packet processing circuitry is to update the per-node packet counters responsively to the given regions of the memory being accessed based on the given match-and-action tables being called by the steering engine, and the packet processing circuitry is configured to dynamically assign the per-node packet counters to different ones of the nodes of the graph in respective different time periods by assigning the per-node packet counters to different ones of the regions of the memory.

Additionally in accordance with an embodiment of the present disclosure the per-node packet counters are hardware counters.

Moreover, in accordance with an embodiment of the present disclosure the packet processing circuitry is to update the per-node packet counters responsively to the ones of the packets traversing the respective ones of the nodes of the graph.

Further in accordance with an embodiment of the present disclosure the packet processing circuitry is to sample a number of the packets traversing the respective ones of the nodes of the graph intermittently.

Still further in accordance with an embodiment of the present disclosure the packet processing circuitry is to dynamically assign the per-node packet counters to different ones of the nodes of the graph in respective different time periods so that the per-node packet counters are to count the packets traversing the different nodes over time.

There is also provided in accordance with another embodiment of the present disclosure, a system, including the network device, and a processor to execute software to intermittently read the per-node packet counters and provide indications of usage of different edges of the graph by the packets.

Additionally in accordance with an embodiment of the present disclosure the software is to compute a distribution of usage of the different edges by the packets based on values of the per-node packet counters.

There is also provided in accordance with still another embodiment of the present disclosure a system, including the network device, and a processor to execute software to intermittently read values of the per-node packet counters, and compute an average of the values for each of the per-node packet counters.

There is also provided in accordance with still another embodiment of the present disclosure, a method, including receiving packets, processing the packets match-and-action tables, the match-and-action tables defining nodes in a graph so that during the processing of the packets by a steering engine the packets traverse paths in the graph, and counting using a plurality of per-node packet counters ones of the packets traversing respective ones of the nodes of the graph.

Moreover, in accordance with an embodiment of the present disclosure, the method includes updating the per-node packet counters responsively to the ones of the packets traversing the respective ones of the nodes of the graph.

Further in accordance with an embodiment of the present disclosure, the method includes dynamically assigning the per-node packet counters to different ones of the nodes of the graph in respective different time periods so that the per-node packet counters are counting the packets traversing the different nodes over time.

Still further in accordance with an embodiment of the present disclosure, the method includes intermittently reading the per-node packet counters, and providing indications of usage of different edges of the graph by the packets.

Additionally in accordance with an embodiment of the present disclosure, the method includes computing a distribution of usage of the different edges by the packets based on values of the per-node packet counters.

Moreover, in accordance with an embodiment of the present disclosure, the method includes sampling a number of the packets traversing the respective ones of the nodes of the graph intermittently.

Further in accordance with an embodiment of the present disclosure, the method includes intermittently reading values of the per-node packet counters, and computing an average of the values for each of the per-node packet counters.

Still further in accordance with an embodiment of the present disclosure, the method includes find ones of the match-and-action tables associated with the per-node packet counters, updating the per-node packet counters responsively to the found match-and-action tables associated with the per-node packet counters, and instructing at least one processor to update the per-node packet counters responsively to finding the match-and-action tables associated with the per-node packet counters.

Additionally in accordance with an embodiment of the present disclosure, the method includes assigning the match-and-action tables to regions of a memory, associating the per-node packet counters with given ones of the regions of the memory associated with given ones of the match-and-action tables, updating the per-node packet counters responsively to the given regions of the memory being accessed based on the given match-and-action tables being called by the steering engine, and dynamically assigning the per-node packet counters to different ones of the nodes of the graph in respective different time periods by assigning the per-node packet counters to different ones of the regions of the memory.

Moreover, in accordance with an embodiment of the present disclosure the per-node packet counters are hardware counters.

A network device includes an interface to receive packets, packet processing circuitry including a steering engine to process the packets according to match-and-action tables, the match-and-action tables defining nodes in a graph so that during the processing of the packets by the steering engine the packets traverse paths in the graph, and a plurality of per-node packet counters to count ones of the packets traversing respective ones of the nodes of the graph.

Any feature of one aspect or embodiment may be applied to other aspects or embodiments, in any appropriate combination. **In** particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a block diagram view of a computer system constructed and operative in accordance with an embodiment of the present disclosure;
Figs. 2 and 3 are schematic views of an example graph including nodes and edges representative of steering processing in the system of Fig. 1;
Fig. 4 is a flowchart including steps in a packet counting method of operation of the system of Fig. 1;
Fig. 5 is a flowchart including steps in a method to identify path usage in the system of Fig. 1;
Fig. 6 is a flowchart including steps in a first method to dynamically assign per-node packet counters to nodes in the system of Fig. 1;
Fig. 7 is a flowchart including steps in a method to update the per-node packet counters when the counters are assigned according to the method of Fig. 6; and
Fig. 8 is a flowchart including steps in a second method to dynamically assign per-node packet counters to nodes in the system of Fig. 1.

### DESCRIPTION OF EXAMPLE EMBODIMENTS

### OVERVIEW

The steering engine of a network device performs actions according to match-and-action tables. For example, a packet header is parsed, and data based on some of the parsed header data and/or packet metadata is matched against one or more of the match-and-action tables to find an action or actions to be performed. The action(s) found may include any suitable action or actions such as updating a packet header, forwarding a packet, copying a packet, dropping a packet, performing a computation based on the packet header or metadata. An action may include searching for, and or through, another match-and-action table. The steering engine may perform multiple matches against match-and-action tables for a single packet and may perform one or more actions besides from searching the match-and-action tables.

The processing of a given packet by the steering engine may result in a given subset of the match-and-action tables being found in a given order by the matches performed by the steering engine for the given packet. The processing of another packet may result in another subset of the match-and-action tables being found in a different order in the matches performed by the steering engine. For example, if there are 10 match-and-action tables, the matching of the steering engine for one packet may yield a path including match-and-action tables 1, 5, and 8, whereas the matching of the steering engine for another packet may yield a different path including match-and-action tables 1, 3, and 10.

The processing of a given packet by the steering engine may define a path that traverses a given subset of the match-and-action tables in a given order. The processing of a different packet by the steering engine may define another path that traverses a different subset of the match-and-action tables in a different order. Therefore, in general, the match-and-action tables define nodes in a graph with edges between the nodes, and paths traversing the graph being defined by different combinations of the edges, so that during the processing of the packets by the steering engine, the packets may be considered as traversing paths in the graph. A packet may traverse any one of the paths depending on the matches performed for that packet.

The paths taken by different packets through the graph during processing by the steering engine are generally not tracked (as the packets are generally processed in hardware) and therefore the number of packets taking different paths through the graph is not known to the system developer. In particular, the graph may include one or more "hot" paths which represent the most used path or paths in the graph. The graph may also include one or more "hotspots" which represent the most used node or nodes in the graph. Knowledge of the hot path(s) and/or hot spot(s) may enable identifying bottlenecks in the steering process. The steering process may then be updated, e.g., by changing the match-and-action tables structure or order, to relieve the bottlenecks. For example, if a given match-and-action table is very large, it may take a long time to search in that table. Therefore, if a given type or types of packets are "accessing" that large table, it may be better to use a smaller table for the given type(s) of packets. However, if all tables were small that would lead to more tables and more processing time overall. Therefore, the system developer may try to configure the match-and-action tables so that paths of major traffic are more efficient than paths of minor traffic. However, paths of major traffic first need to be identified.

One solution is to collect data for each packet to show the history of the match-and-action tables traversed. However, this is very difficult to perform and affects all the packets.

Therefore, embodiments of the present disclosure address at least some of the above drawbacks by assigning per-node packet counters to count packets traversing given nodes of the graph. The per-node packet counters are dynamically assigned to different nodes of the graph to count packets traversing the different nodes of the graph. The per-node packet counters may be reassigned to different nodes multiple times until all the nodes in the graph are packet counted. In the above manner, the packets traversing the nodes of the graph may be counted and evaluated to identify the number packets traversing the edges of the graph or the distribution (e.g., ratio or weights or percentages) of packets traversing different edges of the graph. The hot spot(s) and/or hot path(s) of the graph may then be identified. The system developer may be able to improve steering performance based on knowledge of the traffic per second entering the network device, the size of the match-and-action tables, and the identified hot spot(s) and/or hot path(s). The host spot(s) may represent key performance indicator(s) (KPI(s)) that may be used by the system to track and log performance.

In some embodiments, two or three counters (or any suitable number of counters) may be assigned to count packets for two or three corresponding nodes of the graph for one time period. The counters may then be reassigned to other nodes in a second time period, and so on. In this manner, the overhead of counting the packets does not materially affect the steering performance. The counters could be updated on a sample basis intermittently (e.g., relevant packets are counted ten times over a period of time for 10 milliseconds each time) and then an average may be computed of the sampled values. The counter values may be read by software running on a connected host device or running on a processor in the network device. The software may then use the read values to identify the number packets traversing the edges of the graph or the distribution (e.g., ratio or weights) of packets traversing different edges of the graph in order to identify the hot spot(s) and/or hot path(s) of the graph.

As previously mentioned, the processor may find match-and-action tables in a given order while processing a packet. In some embodiments, a given counter may be assigned to a given node associated with a given match-and-action table by configuring the processor to update (e.g., increment) the given counter when the processor finds the given match-and-action table.

In other embodiments, the match-and-action tables are assigned to different regions of memory. The per-node packets counters are also associated with given regions of memory which are associated with given match-and-action tables. When the memory region associated with one of the given match-and-action tables is accessed, the network device is configured to update (e.g., increment) the counter associated with the accessed memory region. In this manner, the per-node packet counters may be associated with different nodes by reassigning the association of the per-node packet counters to different regions of the memory associated with the different match-and-action tables.

### SYSTEM DESCRIPTION

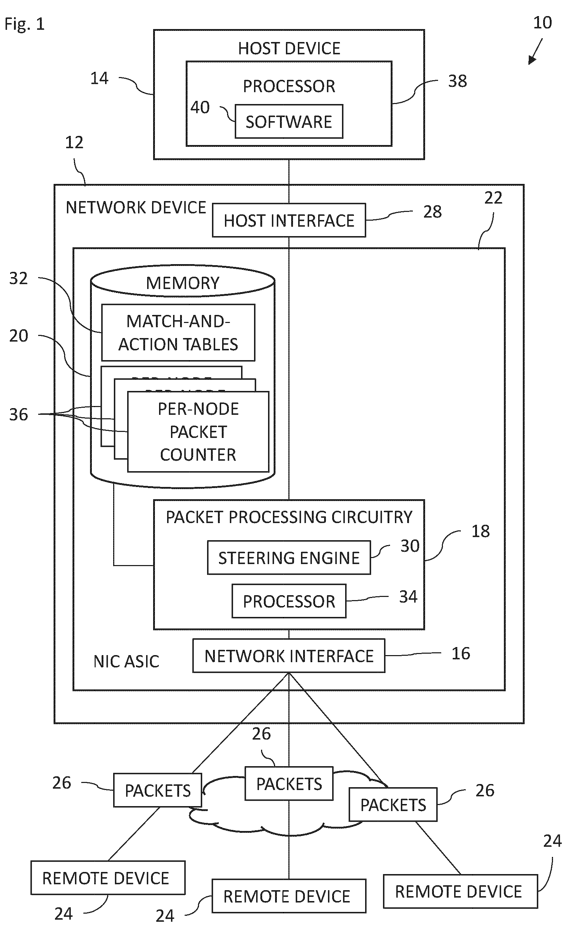

Reference is now made to Fig. 1, which is a block diagram view of a computer system 10 constructed and operative in accordance with an embodiment of the present disclosure. The system 10 includes a network device 12 and a host device 14. The network device 12 includes a network interface 16, packet processing circuitry 18, a memory 20, and a host interface 28. The network device 12 may include a network interface controller (NIC) application-specific integrated circuit (ASIC) 22. The NIC ASIC 22 may include the network interface 16, packet processing circuitry 18, the memory 20, and the host interface 28.

The network interface 16 is configured to receive packets 26 from, and/or send packets 26 to, one or more remote devices 24. The host interface 28 is configured to receive packets from the host device 14 for sending over the network or to provide packets received from the remote devices 24 to the host interface 28. The host interface 28 may be implemented using any suitable standard, for example, Peripheral Component Interconnect Express (PCIe).

The packet processing circuitry 18 is configured to perform packet processing on packets received from the remote devices 24 or on packets received from the host device 14 for sending to remote devices 24. The packet processing circuitry 18 includes a steering engine 30 for performing steering functionality using match-and-action tables 32 stored in memory 20. The packet processing circuitry 18 may include a physical layer (PHY) and MAC chip.

The steering engine 30 is configured to perform actions according to match-and-action tables 32. For example, a packet is parsed by the packet processing circuitry 18 and some of the parsed packet header data and/or packet metadata (optionally after being concatenated and/or processed (e.g., hashed)) is matched against one or more of the match-and-action tables 32 to find an action or actions to be performed. The action(s) found by the matching may include any suitable action or actions such as updating a packet header, forwarding a packet, copying a packet, dropping a packet, performing a computation based on the packet header or metadata. An action may include searching for, and or through, another match-and-action table. The steering engine 30 may perform multiple matches against match-and-action tables for a single packet and may perform one or more actions besides from searching the match-and-action tables 32.

The processing of a given packet by steering engine 30 may result in a given subset of the match-and-action tables 32 being found in a given order by the matches performed by the steering engine 30 for the given packet. The processing of another packet may result in another subset of the match-and-action tables 32 being found in a different order in the matches performed by the steering engine 30. For example, if there are 10 match-and-action tables 32, the matching of the steering engine 30 for one packet may yield a path including match-and-action tables 1, 5, and 8, whereas the matching of the steering engine 30 for another packet may yield a different path including match-and-action tables 1, 3, and 10.

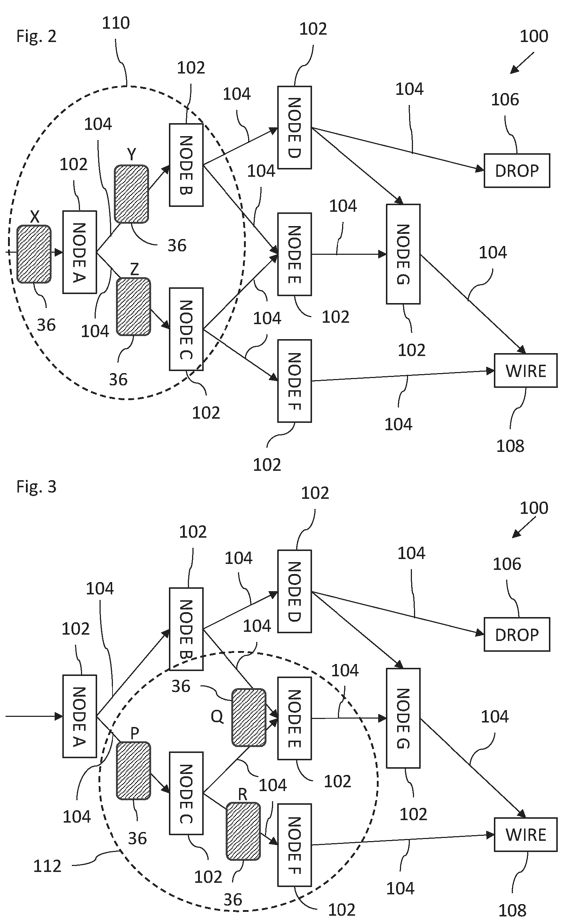

The packet processing circuitry 18 may also include a processor 34 to compute hashes of the packet headers and/or packet metadata with which to search the match-and-action tables 32. The processor 34 may also be configured to update (e.g., increment) per-node packet counters 36 stored in the memory 20. In some embodiments, the per-node packet counters 36 are hardware counters (e.g., stored in memory 20 in hardware of the NIC ASIC 22). The per-node packet counters 36 are configured to count packets traversing respective nodes 102 of graph 100, described in more detail with reference to Figs. 2 and 3.

In practice, some, or all of the functions of the packet processing circuitry 18 may be combined in a single physical component or, alternatively, implemented using multiple physical components. These physical components may comprise hard-wired devices. In some embodiments, at least some of the functions of packet processing circuitry 18 may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

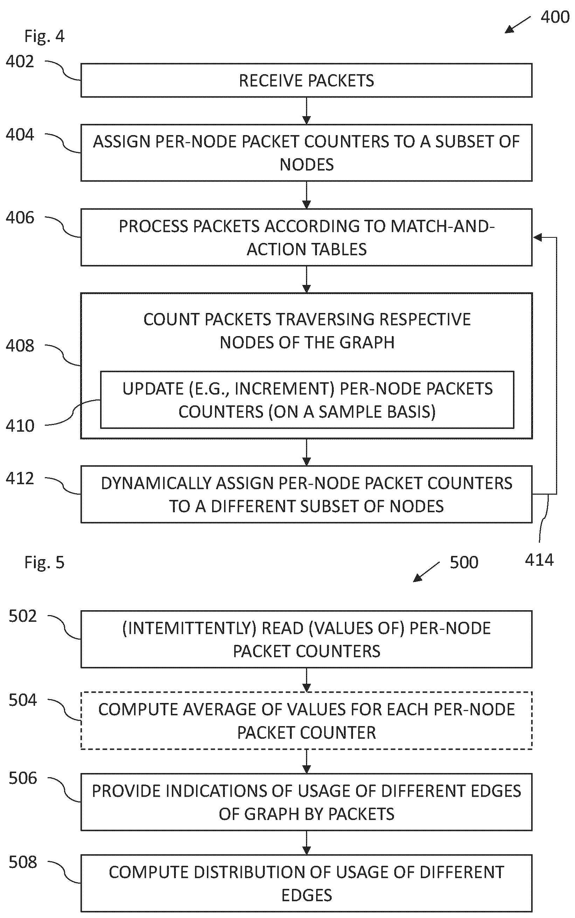

The host device 14 may include a processor 38 (e.g., central processing unit (CPU)) to run software 40. In some embodiments, the functionality of the processor 38 may be implemented in another device or in the network device 12. For example, the functionality of processor 38 may be implemented in a data processing unit (DPU) disposed in the network device 12. The functionality of the software 40 is described in more detail with reference to Fig. 5.

Reference is now made to Figs. 2 and 3, which are schematic views of an example graph 100 including nodes 102 and edges 104 representative of steering processing in the system 10 of Fig. 1. The example graph 100 shown in Figs. 2 and 3 includes six nodes 102 by way of example. For the sake of simplicity of reference, the nodes 102 are referred to as node A, node B, node C, node D, node E, node F, and node G. Two example actions are shown, namely drop (block 106) and send to the wire (block 108).

Fig. 2 shows three per-node packet counters 36 have been assigned to count packets of node A, node B, and node C representing a section 110 of graph 100. Fig. 2 shows that per-node packet counter 36 assigned to node A counts X packets of the traffic processed by the steering engine 30 (either from packets 26 received from the host remote devices 24 or from packets 26 received from host device 14 for sending to the remote devices 24). The per-node packet counter 36 assigned to node B counts Y packets of the traffic and the per-node packet counter 36 assigned to node C counts Z packets of the traffic. The number of packets counted by the per-node packet counters 36 assigned to nodes A, B and C allows the software 40 to compute the distribution of usage between the edge A-B (i.e. the edge between node A and node B) and the edge A-C (i.e., the edge between node A and node C).

The three per-node packet counters 36 may be reassigned to other nodes 102 to count the packets of other nodes 102 of different sections of the graph 100. Fig. 3 shows that the per-node packet counters 36 have been reassigned to count packets of node C, node E, and node F of section 112 of graph 100. Fig. 3 shows that per-node packet counter 36 assigned to node C counts P packets of the traffic. Packet counter 36 assigned to node E counts Q packets of the traffic and the per-node packet counter 36 assigned to node F counts R packets of the traffic. The number of packets counted by the per-node packet counters 36 assigned to nodes C, E and F allows the software 40 to compute the distribution of usage between the edge C-E and the edge C-F. As the packets counted by the per-node packet counter 36 assigned to node E is also counting packets previously processed by node B and node C, this needs to be considered when computing the usage of edge C-E by removing the usage associated with edge B-E.

The per-node packet counters 36 may then be moved around to the other nodes 102 repeating the above process until the whole graph 100 is covered thereby providing a distribution of usage between all the edges 104 of the graph 100 and thereby allowing the software 40 to identify one or more hot paths and/or one or more hot spots.

Reference is now made to Fig. 4, which is a flowchart 400 including steps in a packet counting method of operation of the system of Fig. 1.

The host interface 28 or the network interface 16 is configured to receive packets from the host device 14 for sending to the remote devices 24 or from the remote devices 24 for providing to the host device 14, respectively (block 402). The steering engine 30 is configured to assign per-node packet counters 36 to a subset of the nodes 102 of graph 100 (block 404). The steering engine 30 is configured to process the packets according to match-and-action tables 32 (block 406). The match-and-action tables 32 define nodes 102 in graph 100 so that during the processing of the packets by the steering engine 30 the packets traverse paths (defined by edges 104) in the graph 100. A path is defined by the edges 104 over which a packet traverses graph 100.

The per-node packet counters 36 are configured to count packets traversing respective nodes 102 of the graph 100 (block 408). For example, counter X may be assigned to node A, counter Y to node B, and counter Z to node C, etc. The packet processing circuitry 18 (and in some embodiments the processor 34) is configured to update (increment or decrement) the per-node packet counters 36 responsively to packets traversing the respective nodes 102 of the graph 100 (block 410). For example, when steering engine 30 searches the match-and-action table 32 of node A and finds a match with the match-and-action table 32 of node A, the packet processing circuitry 18 is configured to increment counter X, and when steering engine 30 searches the match-and-action table 32 of node B and finds a match with the match-and-action table 32 of node B, the packet processing circuitry 18 is configured to increment counter Y, and so on.

In some embodiments, per-node packet counters 36 may count all the relevant packets for a period of time, and then the count of packets is read by the software 40. In some embodiments, the packet processing circuitry 18 is configured to sample the number of the packets traversing the respective ones of the nodes 102 of the graph 100 intermittently and update the per-node packet counters 36 accordingly so that over a period of time, the counters 36 may be updated during given sub-periods of the period of time. For example, the packets may be counted for 100 milliseconds every round second.

The packet processing circuitry 18 is configured to dynamically assign the per-node packet counters 36 to different nodes 102 of the graph 100 in respective different time periods so that the per-node packet counters 36 are configured to count the packets traversing the different nodes 102 over time (block 412). For example, in one time period the per-node packet counters 36 may be assigned to nodes C, E, and F, and in other time period the per-node packet counters 36 may be assigned to nodes B, D, and E, and so on. The steps of blocks 406-410 are repeated (arrow 414) for the different assignments of the per-node packet counters 36 to nodes 102.

Reference is now made to Fig. 5, which is a flowchart 500 including steps in a method to identify path usage in the system 10 of Fig. 1.

The software 40 is configured to read values of the per-node packet counters 36 (block 502). For example, the software 40 may read the values of the per-node packet counters 36 prior to the per-node packet counters 36 being reassigned to different nodes 102 of graph 100. In some embodiments, the software 40 is configured to intermittently read values of the per-node packet counters 36 (block 502) and compute an average of the read values for each of the per-node packet counters 36 (block 504). For example, while one of the per-node packet counters 36 is assigned to node A, the software 40 may intermittently read the value of that per-node packet counter 36 and average the read values. The software 40 may be configured to provide indications of usage (e.g., in terms of the number of packets counted) of different edges 104 of the graph 100 by the packets based on the read counter values. In some embodiments, the software 40 is configured to compute a distribution of usage of the different edges 104 by the packets traversing the graph 100 based on values of the per-node packet counters 36. The distribution of the usage of the different edges 104 may be expressed by showing the percentage or fraction or weight of packets counted traversing the different edges 104. In some embodiments, a score may be assigned to each 104 representing the usage of each edge 104 by the packets. The software 40 may also identify the hot path(s) and/or hot spot(s) based on the computed distribution.

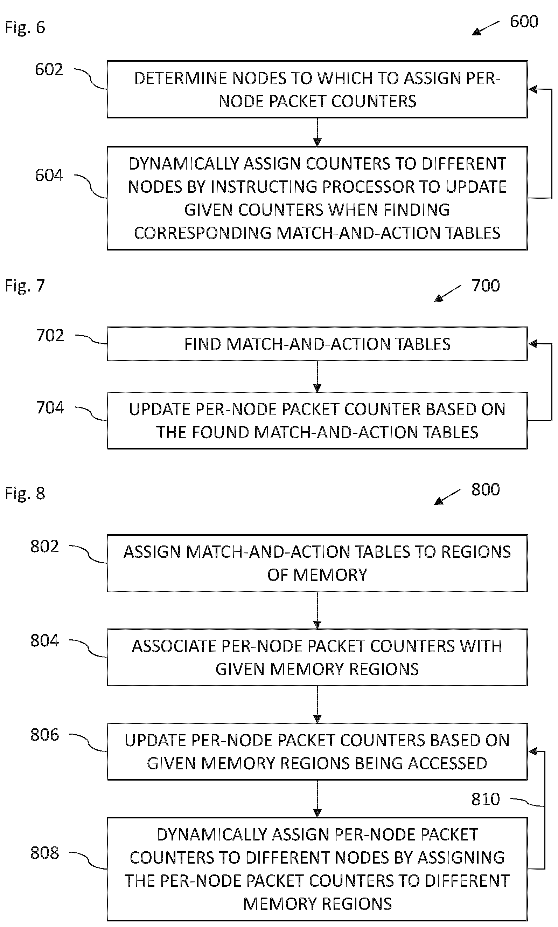

Reference is now made to Fig. 6, which is a flowchart 600 including steps in a first method to dynamically assign per-node packet counters 36 to nodes 102 in the system 10 of Fig. 1. In some embodiments, a given counter 36 may be assigned to a given node 102 by the packet processing circuitry 18 configuring the processor 34 to update (e.g., increment) the given counter 36 associated with a given match-and-action table 36 of the given node 102 when the processor 34 finds the given match-and-action table 32 while processing a packet (e.g., by hashing packet header or packet metadata to find a hash value in one of the match-and-action tables 32).

Therefore, packet processing circuitry 18 is configured to determine a subset of nodes 102 to which to assign the per-node packet counters 36 (block 602). The packet processing circuitry 18 is configured to instruct the processor 34 to update (e.g., increment) the per-node packet counters 36 responsively to finding match-and-action tables (e.g., based on computing given hash values) (block 604) as described in more detail with reference to Fig. 7. The steps of blocks 602-604 are repeated for different assignments of the per-node packet counters 36 to different nodes 102 of graph 100.

Reference is now made to Fig. 7, which is a flowchart 700 including steps in a method to update the per-node packet counters 36 when the counters 36 are assigned according to the method of Fig. 6. The processor 34 is configured to: find match-and-action tables 32 (e.g., based on computing hash values) associated with the assigned per-node packet counters 36 (block 702); and update the per-node packet counters 36 responsively to the found match-and-action tables 32 associated with the per-node packet counters 36 (block 704). For example, if the processor 34 computes a hash value for a given packet (e.g., based on header data and/or metadata of the given packet), and the hash value matches a given match-and-action table 32, the processor 34 is configured to update (e.g., increment) the per-node packet counter 36 associated with the given match-and-action table 32. For example, the processing jumps to an anchor in a match-and-table which directs processing to perform an action to update the per-node packet counter 36 associated with the given match-and-action table 32.

Reference is now made to Fig. 8, which is a flowchart 800 including steps in a second method to dynamically assign per-node packet counters 36 to nodes 102 in the system 10 of Fig. 1. The packet processing circuitry 18 or the processor 38 is configured to assign the match-and-action tables 32 to regions of memory 20 (block 802) (Fig. 1). The packet processing circuitry 18 is configured to associate the per-node packet counters 36 with given regions of the memory 20 associated with given match-and-action tables 32 (and therefore associate with given nodes 102) (block 804). The packet processing circuitry 18 is configured to update (e.g., increment) the per-node packet counters 36 responsively to the given regions of memory 20 being accessed based on the given match-and-action tables 32 being called by the steering engine 30 (block 806). For example, when a given one of the match-and-action tables 32 is called by steering engine 30, the packet processing circuitry 18 is configured to update the per-node packet counter 36 assigned to the same memory region as the called match-and-action table 32. The packet processing circuitry 18 is configured to dynamically assign the per-node packet counters 36 to different nodes 102 of graph 100 in respective different time periods by assigning the per-node packet counters 36 to different regions of the memory 20 corresponding to the match-and-action tables 32 of the different nodes 102 (block 808). The steps of blocks 806-808 are repeated (block 810) for different subsets of nodes 102 of graph 100.

Various features of the disclosure which are, for clarity, described in the contexts of separate embodiments may also be provided in combination in a single embodiment. Conversely, various features of the disclosure which are, for brevity, described in the context of a single embodiment may also be provided separately or in any suitable sub-combination.

The embodiments described above are cited by way of example, and the present disclosure is not limited by what has been particularly shown and described hereinabove. Rather the scope of the disclosure includes both combinations and sub-combinations of the various features described hereinabove, as well as variations and modifications thereof which would occur to persons skilled in the art upon reading the foregoing description and which are not disclosed in the prior art.

It will be understood that aspects and embodiments are described herein purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A network device comprising:
   an interface to receive packets;
   packet processing circuitry including a steering engine to process the packets according to match-and-action tables, the match-and-action tables defining nodes in a graph so that during the processing of the packets by the steering engine the packets traverse paths in the graph; and
   a plurality of per-node packet counters to count ones of the packets traversing respective ones of the nodes of the graph.
Clause 2. The device according to clause 1, wherein the packet processing circuitry includes at least one processor to: find ones of the match-and-action tables associated with the per-node packet counters; and update the per-node packet counters responsively to the found match-and-action tables associated with the per-node packet counters, wherein the packet processing circuitry is to instruct the at least one processor to update the per-node packet counters responsively to finding the match-and-action tables associated with the per-node packet counters.
Clause 3. The device according to clause 1, further comprising a memory, wherein:
   the match-and-action tables are assigned to regions of the memory;
   the per-node packet counters are associated with given ones of the regions of the memory associated with given ones of the match-and-action tables;
   the packet processing circuitry is to update the per-node packet counters responsively to the given regions of the memory being accessed based on the given match-and-action tables being called by the steering engine; and
   the packet processing circuitry is configured to dynamically assign the per-node packet counters to different ones of the nodes of the graph in respective different time periods by assigning the per-node packet counters to different ones of the regions of the memory.
Clause 4. The device according to clause 1, wherein the per-node packet counters are hardware counters.
Clause 5. The device according to clause 1, wherein the packet processing circuitry is to update the per-node packet counters responsively to the ones of the packets traversing the respective ones of the nodes of the graph.
Clause 6. The device according to clause 5, wherein the packet processing circuitry is to sample a number of the packets traversing the respective ones of the nodes of the graph intermittently.
Clause 7. The device according to clause 5, wherein the packet processing circuitry is to dynamically assign the per-node packet counters to different ones of the nodes of the graph in respective different time periods so that the per-node packet counters are to count the packets traversing the different nodes over time.
Clause 8. A system, comprising: the device of clause 7; and a processor to execute software to intermittently read the per-node packet counters and provide indications of usage of different edges of the graph by the packets.
Clause 9. The system according to clause 8, wherein the software is to compute a distribution of usage of the different edges by the packets based on values of the per-node packet counters.
Clause 10. A system, comprising: the device according to clause 5; and a processor to execute software to: intermittently read values of the per-node packet counters; and compute an average of the values for each of the per-node packet counters.
Clause 11. A method, comprising:
   receiving packets;
   processing the packets according to match-and-action tables, the match-and-action tables defining nodes in a graph so that during the processing of the packets by a steering engine the packets traverse paths in the graph; and
   counting using a plurality of per-node packet counters ones of the packets traversing respective ones of the nodes of the graph.
Clause 12. The method according to clause 11, further comprising updating the per-node packet counters responsively to the ones of the packets traversing the respective ones of the nodes of the graph.
Clause 13. The method according to clause 12, further comprising dynamically assigning the per-node packet counters to different ones of the nodes of the graph in respective different time periods so that the per-node packet counters are counting the packets traversing the different nodes over time.
Clause 14. The method according to clause 13, further comprising:
   intermittently reading the per-node packet counters; and
   providing indications of usage of different edges of the graph by the packets.
Clause 15. The method according to clause 14, further comprising computing a distribution of usage of the different edges by the packets based on values of the per-node packet counters.
Clause 16. The method according to clause 12, further comprising sampling a number of the packets traversing the respective ones of the nodes of the graph intermittently.
Clause 17. The method according to clause 16, further comprising:
   intermittently reading values of the per-node packet counters; and
   computing an average of the values for each of the per-node packet counters.
Clause 18. The method according to clause 11, further comprising:
   find ones of the match-and-action tables associated with the per-node packet counters;
   updating the per-node packet counters responsively to the found match-and-action tables associated with the per-node packet counters; and
   instructing at least one processor to update the per-node packet counters responsively to finding the match-and-action tables associated with the per-node packet counters.
Clause 19. The method according to clause 11, further comprising:
   assigning the match-and-action tables to regions of a memory;
   associating the per-node packet counters with given ones of the regions of the memory associated with given ones of the match-and-action tables;
   updating the per-node packet counters responsively to the given regions of the memory being accessed based on the given match-and-action tables being called by the steering engine; and
   dynamically assigning the per-node packet counters to different ones of the nodes of the graph in respective different time periods by assigning the per-node packet counters to different ones of the regions of the memory.
Clause 20. The method according to clause 11, wherein the per-node packet counters are hardware counters.

## Claims

1. A network device comprising:
an interface to receive packets;
packet processing circuitry including a steering engine to process the packets according to match-and-action tables, the match-and-action tables defining nodes in a graph so that during the processing of the packets by the steering engine the packets traverse paths in the graph; and
a plurality of per-node packet counters to count ones of the packets traversing respective ones of the nodes of the graph.

2. The device according to claim 1, wherein the packet processing circuitry includes at least one processor to: find ones of the match-and-action tables associated with the per-node packet counters; and update the per-node packet counters responsively to the found match-and-action tables associated with the per-node packet counters, wherein the packet processing circuitry is to instruct the at least one processor to update the per-node packet counters responsively to finding the match-and-action tables associated with the per-node packet counters.

3. The device according to claim 1 or 2, further comprising a memory, wherein:
the match-and-action tables are assigned to regions of the memory;
the per-node packet counters are associated with given ones of the regions of the memory associated with given ones of the match-and-action tables;
the packet processing circuitry is to update the per-node packet counters responsively to the given regions of the memory being accessed based on the given match-and-action tables being called by the steering engine; and
the packet processing circuitry is configured to dynamically assign the per-node packet counters to different ones of the nodes of the graph in respective different time periods by assigning the per-node packet counters to different ones of the regions of the memory.

4. The device according to claim 1, 2, or 3, wherein the per-node packet counters are hardware counters.

5. The device according to any preceding claim, wherein the packet processing circuitry is to update the per-node packet counters responsively to the ones of the packets traversing the respective ones of the nodes of the graph, wherein the packet processing circuitry is to sample a number of the packets traversing the respective ones of the nodes of the graph intermittently, wherein the packet processing circuitry is to dynamically assign the per-node packet counters to different ones of the nodes of the graph in respective different time periods so that the per-node packet counters are to count the packets traversing the different nodes over time.

6. A system, comprising: the device of claim 5; and a processor to execute software to intermittently read the per-node packet counters and provide indications of usage of different edges of the graph by the packets.

7. The system according to claim 6, wherein the software is to compute a distribution of usage of the different edges by the packets based on values of the per-node packet counters.

8. A system, comprising: the device according to claim 5; and a processor to execute software to: intermittently read values of the per-node packet counters; and compute an average of the values for each of the per-node packet counters.

9. A method, comprising:
receiving packets;
processing the packets according to match-and-action tables, the match-and-action tables defining nodes in a graph so that during the processing of the packets by a steering engine the packets traverse paths in the graph; and
counting using a plurality of per-node packet counters ones of the packets traversing respective ones of the nodes of the graph.

10. The method according to claim 9, further comprising updating the per-node packet counters responsively to the ones of the packets traversing the respective ones of the nodes of the graph, further comprising dynamically assigning the per-node packet counters to different ones of the nodes of the graph in respective different time periods so that the per-node packet counters are counting the packets traversing the different nodes over time, further comprising:
intermittently reading the per-node packet counters; and
providing indications of usage of different edges of the graph by the packets, further comprising computing a distribution of usage of the different edges by the packets based on values of the per-node packet counters.

11. The method according to claim 10, further comprising sampling a number of the packets traversing the respective ones of the nodes of the graph intermittently.

12. The method according to claim 11, further comprising:
intermittently reading values of the per-node packet counters; and
computing an average of the values for each of the per-node packet counters.

13. The method according to any of claims 9-12, further comprising:
find ones of the match-and-action tables associated with the per-node packet counters;
updating the per-node packet counters responsively to the found match-and-action tables associated with the per-node packet counters; and
instructing at least one processor to update the per-node packet counters responsively to finding the match-and-action tables associated with the per-node packet counters.

14. The method according to any of claims 9-13, further comprising:
assigning the match-and-action tables to regions of a memory;
associating the per-node packet counters with given ones of the regions of the memory associated with given ones of the match-and-action tables;
updating the per-node packet counters responsively to the given regions of the memory being accessed based on the given match-and-action tables being called by the steering engine; and
dynamically assigning the per-node packet counters to different ones of the nodes of the graph in respective different time periods by assigning the per-node packet counters to different ones of the regions of the memory.

15. The method according to any of claims 9-14, wherein the per-node packet counters are hardware counters.
